# EUROPEAN PATENT APPLICATION

(11) **EP 4 075 293 A1**
(43) Date of publication of application: **19.10.2022**
(21) Application number: 20898294.2
(22) Date of filing: 15.05.2020
(51) Int. Cl.: G06F 16/23, G06F 16/27

(54) **BLOCKCHAIN CROSS-CHAIN DATA ACCESS METHOD AND DEVICE, ADAPTER, AND SYSTEM**

(30) Priority: 10.12.2019 CN 201911261811
(71) Applicant: Jingdong Technology Information Technology Co., Ltd., Beijing 100176 (CN); Jingdong Technology Holding Co., Ltd., Beijing 100176 (CN)
(72) Inventor: ZHAO, Ming, Beijing 100176 (CN); MA, Chao, Beijing 100176 (CN); SUN, Haibo, Beijing 100176 (CN); WANG, Yi, Beijing 100176 (CN)
(74) Representative: karo IP
(86) International application number: PCT/CN2020/090658
(87) International publication number: WO 2021/114572

(57) **Abstract**

The present application relates to a blockchain cross-chain data access method, a device, an adapter, and a system. According to the technical solution, an adapter is added between a service blockchain and a witness blockchain, a cross-chain initiation event and a cross-chain response event on a local service blockchain are registered to the witness blockchain by using the adapter, cross-chain event querying and push services are provided for other nodes on the local service blockchain, and a related operations on the local service blockchain can be triggered according to a cross-chain event of the witness blockchain. Therefore, a blockchain information island is avoided, data exchange between different blockchains is achieved, cross-chain communication between multiparty services and the sharing of data resources on different blockchains are achieved; and the utilization efficiency of data resources is improved.

## Description

The present application claims priority to Chinese Patent Application entitled "BLOCKCHAIN CROSS-CHAIN DATA ACCESS METHOD AND DEVICE, ADAPTER, AND SYSTEM" with an application number of 201911261811.6 and filed with China National Intellectual Property Administration on December 10, 2019, all contents of which are herein incorporated by reference.

### TECHNICAL FIELD

The present application relates to the field of blockchain technology, and particularly, to a method, an apparatus, an adapter and a system for cross-chain data access of blockchain.

### BACKGROUND

Blockchain is a new application model of computer technology such as distributed data storage, peer-to-peer transmission, consensus mechanism and encryption algorithm. Blockchain is a distributed shared account and database, with the characteristics of decentralization, non-tampering, leaving traces throughout, traceability, collective maintenance, openness and transparency. These characteristics ensure the "honesty" and "transparency" of the blockchain, and lay the foundation for the blockchain to create trust. Most of the rich application scenarios of the blockchain are basically based on that the blockchain may solve the problem of information asymmetry, and achieve collaborative trust and consistent action among multiple subjects.

With the development of blockchain technology, new chains are constantly being born, and the demand for data interaction between chains is increasing. However, since the blockchain is a relatively closed system, different blockchain protocols are not compatible and are in a relatively split state. The huge difficulty in collaboration between different blockchains greatly limits the development of blockchain applications.

### SUMMARY

In order to solve the above technical problems or at least partially solve the above technical problems, the embodiments of the present application provide a method and an apparatus for cross-chain data access of blockchain, an adapter and a system.

In a first aspect, an embodiment of the present application provides a method for cross-chain data access of blockchain, and the method includes:
monitoring a first cross-chain initiation event on a service blockchain, the first cross-chain initiation event being triggered and generated by executing a first cross-chain contract by the service blockchain, wherein when the first cross-chain contract is completed, first data corresponding to the first cross-chain initiation event is locked by the service blockchain; and
calling a witness blockchain to execute a first witness contract on the first cross-chain initiation event so as to record the first cross-chain initiation event at each node of the witness blockchain.

Optionally, the method further includes:
monitoring a second cross-chain initiation event accessing the service blockchain from the witness blockchain, wherein when the service blockchain acquires the second cross-chain initiation event, the service blockchain calls a second cross-chain contract according to the second cross-chain initiation event so as to trigger a second cross-chain response event; and
when the second cross-chain response event is monitored from the service blockchain, calling the witness blockchain to execute a second witness contract on the second cross-chain response event so as to record the second cross-chain response event at each node of the witness blockchain.

Optionally, the method further includes:
when a first cross-chain response event corresponding to the first cross-chain initiation event is monitored from the witness blockchain, calling the service blockchain to execute a third cross-chain contract so as to unlock the first data on the service blockchain.

In a second aspect, an embodiment of the present application provides an adapter connected between a service blockchain and a witness blockchain, and the adapter includes:
a monitoring module, configured to monitor a first cross-chain initiation event on the service blockchain, the first cross-chain initiation event being triggered and generated by executing a first cross-chain contract by the service blockchain, wherein when the first cross-chain contract is completed, first data corresponding to the first cross-chain initiation event is locked by the service blockchain; and
a calling module, configured to call a witness blockchain to execute a first witness contract on the first cross-chain initiation event so as to record the first cross-chain initiation event at each node of the witness blockchain.

Optionally, the monitoring module is further configured to monitor a second cross-chain initiation event accessing the service blockchain from the witness blockchain, wherein when the service blockchain acquires the second cross-chain initiation event, the service blockchain calls a second cross-chain contract according to the second cross-chain initiation event so as to trigger a second cross-chain response event; and
the calling module is further configured to, when the second cross-chain response event is monitored from the service blockchain by the monitoring module, call the witness blockchain to execute a second witness contract on the second cross-chain response event so as to record the second cross-chain response event at each node of the witness blockchain.

Optionally, the calling module is further configured to, when a first cross-chain response event corresponding to the first cross-chain initiation event is monitored from the witness blockchain by the monitoring module, call the service blockchain to execute a third cross-chain contract so as to unlock the first data on the service blockchain.

In a third aspect, an embodiment of the present application provides a method for cross-chain data access of blockchain, and the method includes:
executing a first witness contract according to calling of a first adapter, recording a cross-chain initiation event monitored by the first adapter at each node of a witness blockchain, wherein the cross-chain initiation event is triggered by a first service blockchain according to a request of an initiation client; and
executing a second witness contract according to calling of a second adapter, recording a cross-chain response event monitored by the second adapter at each node of the witness blockchain, wherein the cross-chain response event is corresponding to the cross-chain initiation event, and the cross-chain response event is triggered by a second service blockchain according to a request of a reception client.

In a fourth aspect, an embodiment of the present application provides an apparatus for cross-chain data access of blockchain, and the apparatus includes:
a first witness module configured to execute a first witness contract according to calling of a first adapter, record a cross-chain initiation event monitored by the first adapter at each node of a witness blockchain, wherein the cross-chain initiation event is triggered by a first service blockchain according to a request of an initiation client; and
a second witness module configured to execute a second witness contract according to calling of a second adapter, record a cross-chain response event monitored by the second adapter at each node of the witness blockchain, wherein the cross-chain response event is corresponding to the cross-chain initiation event, and the cross-chain response event is triggered by a second service blockchain according to a request of a reception client.

In a fifth aspect, an embodiment of the present application provides a cross-chain system of blockchain, and the system includes: at least two service blockchains and at least one witness blockchain with adapters providing between each of the service blockchains and each of the witness blockchain, wherein a first adapter is connected between a first service blockchain and the witness blockchain and a second adapter is connected between a second service blockchain and the witness blockchain;
the first service blockchain, configured to execute a first cross-chain contract according to a request of an initiation client to trigger a cross-chain initiation event and lock first data corresponding to the cross-chain initiation event, and execute a third cross-chain contract according to a cross-chain response event to unlock the first data;
the first adapter, configured to, when the cross-chain initiation event is monitored from the first service blockchain, call the witness blockchain to execute a first witness contract on the cross-chain initiation event, and monitor the cross-chain response event from the witness blockchain;
the witness blockchain, configured to execute the first witness contract according to calling of the first adapter, and record the cross-chain initiation event at each node of the witness blockchain, and execute a second witness contract according to calling of the second adapter and record the cross-chain response event at each node of the witness blockchain;
the second adapter, configured to monitor the cross-chain initiation event aiming at the second service blockchain from the witness blockchain, and when the cross-chain response event triggered by the second service blockchain is monitored, call the witness blockchain to execute the second witness contract on the cross-chain response event; and
the second service blockchain, configured to, when the cross-chain initiation event is acquired from the second adapter by a reception client, call a second cross-chain contract according to a request of the reception client so as to trigger the cross-chain response event corresponding to the cross-chain initiation event.

Optionally, the first data includes a key name and a first key value, and the first cross-chain initiation event includes the first data.

Further, the second service blockchain is configured to query second data matching the key name, modify a second key value of the second data according to the first key value of the first data and lock the modified second data, and trigger the cross-chain response event according to the modified second data.

In a sixth aspect, an embodiment of the present application provides an electronic device, including: a processor, a communication interface, a memory, and a communication bus, wherein the processor, the communication interface, and the memory communicate with each other by the communication bus;
the memory is configured to store computer programs; and
the processor is configured to implement steps of the above method when executing the computer programs.

In a seventh aspect, an embodiment of the present application provides a computer-readable storage medium on which computer programs are stored, and when the computer programs are executed by a processor, steps of the above method are implemented.

The above technical solutions provided by the embodiments of the present application have the following advantages:
adapters are added between the service blockchain and the witness blockchain, and the cross-chain initiation event and the cross-chain response event of the local service blockchain are registered to the witness blockchain by the adapters so as to provide query and push services of cross-chain events to other nodes on the local service blockchain, and trigger related operations on the local service blockchain according to the cross-chain events of the witness blockchain. As a result, island phenomenon of blockchain information is avoided; data exchange between different blockchains, cross-chain communication between services of multi-parties and the sharing of data resources on different blockchains are achieved; and the utilization efficiency of data resources is improved.

### BRIEF DESCRIPTION OF THE DRAWINGS

Here, the drawings are incorporated into and form a part of the description, which shows embodiments consistent with the present application and are used to explain the principles of the present application together with the description.

In order to more clearly illustrate the technical solution in the embodiments of the present application, the drawings to be used in the description of the embodiments will be briefly introduced in the following. Apparently, the drawings in the following description involve some embodiments of the present application. For those of ordinary skill in the art, other drawings can be obtained based on these drawings without paying creative labor.
FIG. 1 is a block diagram of a cross-chain system of blockchain provided by an embodiment of the present application.
FIG. 2 is a schematic diagram of interaction process of cross-chain data access of blockchain provided by an embodiment of the present application.
FIG. 3 is a flowchart of a method for cross-chain data access of blockchain provided by another embodiment of the present application.
FIG. 4 is a flowchart of a method for cross-chain data access of blockchain provided by another embodiment of present application.
FIG. 5 is a flowchart of a method for cross-chain data access of blockchain provided by another embodiment of present application.
FIG. 6 is a block diagram of an adapter provided by an embodiment of the present application.
FIG. 7 is a block diagram of an apparatus for cross-chain data access of blockchain provided by an embodiment of the present application.
FIG. 8 is a schematic diagram of a structure of an electronic device according to an embodiment of the present application.

### DETAILED DESCRIPTION OF THE EMBODIMENTS

The technical solutions in the embodiments of the present application will be described clearly and completely in conjunction with the drawings in the embodiments of the present application so as to make the objectives, technical solutions, and advantages of the embodiments of the present application clearer. Obviously, the described embodiments are only a part of and not all of the embodiments of the present application. Based on the embodiments of the present application, all other embodiments obtained by those of ordinary skill in the art without making creative efforts fall within the protection scope of the present application.

Hereinafter, a cross-chain system of blockchain provided by an embodiment of the present application is firstly introduced.

The system includes at least two service blockchains and at least one witness blockchain with adapters provided between each of the service blockchains and each of the witness blockchain.

In the present embodiment, the service blockchain and the witness blockchain each consists of multiple nodes, and a blockchain network structure with a distributed data storage structure is formed by each of the nodes based on a consensus mechanism. The data in the blockchain is distributed in "blocks" connected in terms of time with the latter block containing data summary of the previous block. Full data backup of all or part of the nodes is achieved according to a specific consensus mechanism (such as POW, POS, DPOS or PBFT, etc.). The blockchain may include public chains, alliance chains, private chains, etc. according to the distributed form of network nodes thereof.

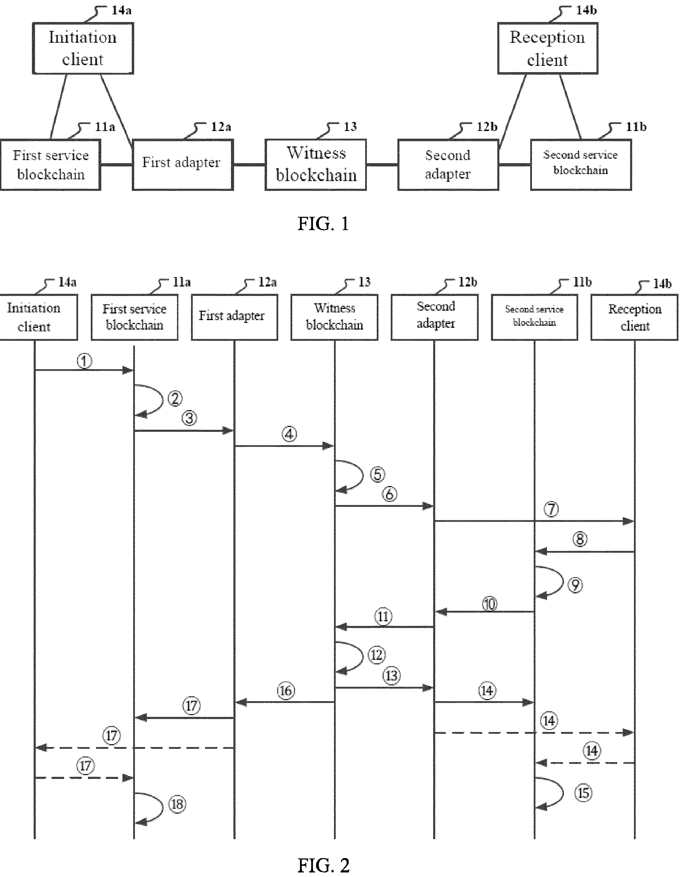

FIG. 1 is a block diagram of a cross-chain system of blockchain provided by an embodiment of the present application. As shown in FIG. 1, the system includes a first service blockchain 11a, a second service blockchain 11b and a witness blockchain 13.

A first adapter 12a is connected between the first service blockchain 11a and the witness blockchain 13, and a second adapter 12b is connected between the second service blockchain 11b and the witness blockchain 13.

The first service blockchain 11a is configured to execute a first cross-chain contract according to a request of the initiation client 14a to trigger a cross-chain initiation event, and lock first data corresponding to the cross-chain initiation event; and execute a third cross-chain contract according to a cross-chain response event so as to unlock the first data.

The first adapter 12a is configured to, when the cross-chain initiation event is monitored from the first service blockchain 11a, call the witness blockchain 13 to execute a first witness contract on the cross-chain initiation event, and monitor the cross-chain response event from the witness blockchain 13.

The witness blockchain 13 is configured to, when the first witness contract is completed, record the cross-chain initiation event at each node of the witness blockchain 13, and execute a second witness contract according to calling of the second adapter 12b and record the cross-chain response event at each node of the witness blockchain 13 when the second witness contract is completed.

The second adapter 12b is configured to monitor the cross-chain initiation event aiming at the second service blockchain 11b from the witness blockchain 13, and when the cross-chain response event triggered by the second service blockchain 11b is monitored, call the witness blockchain 13 to execute the second witness contract on the cross-chain response event.

The second service blockchain 11b is configured to, when the cross-chain initiation event is acquired from the second adapter 12b by a reception client 14b, call a second cross-chain contract according to a request of the reception client 14b so as to trigger the cross-chain response event corresponding to the cross-chain initiation event.

Optionally, the first adapter 12a is further configured to, when the cross-chain response event is monitored from the witness blockchain 13, call the first service blockchain 11a so as to execute the third cross-chain contract according to the cross-chain response event. The first service blockchain 11a is further configured to execute the third cross-chain contract according to calling of the first adapter 12a to unlock the first data.

Optionally, the first service blockchain 11a is further configured to, when the cross-chain response event is acquired from the first adapter 12a by the initiation client 14a, execute the third cross-chain contract according to calling of the initiation client 14a to unlock the first data.

Optionally, the second service blockchain 11b is further configured to lock second data corresponding to the cross-chain initiation event according to the request of the reception client 14b.

Optionally, the second adapter 12b is further configured to, when the result of execution on the second witness contract by the witness blockchain 13 is monitored to be successful, call the second service blockchain 11b to execute a fourth cross-chain contract according to the cross-chain response event. The second service blockchain 11b is further configured to execute the fourth cross-chain contract according to calling of the second adapter 12b so as to unlock the second data.

Optionally, the second adapter 12b is further configured to monitor the result of execution on the second witness contract by the witness blockchain 13. The second service blockchain 11b is further configured to, when the result of execution on the second witness contract is obtained as successful from the second adapter 12b by the reception client 14b, call the fourth cross-chain contract according to calling of the reception client 14b so as to unlock the second data.

In the present embodiment, adapters are added between the service blockchain and the witness blockchain, and the cross-chain initiation event and the cross-chain response event of the local service blockchain are registered to the witness blockchain by the adapters so as to provide query and push services of cross-chain events to other nodes on the local service blockchain, and related operations on the local service blockchain are triggered according to the cross-chain events of the witness blockchain. As a result, island phenomenon of blockchain information is avoided; data exchange between different blockchains, cross-chain communication between services of multi-parties and the sharing of data resources on different blockchains are achieved; and the utilization efficiency of data resources is improved.

Optionally, in the present embodiment, the cross-chain contract on the service blockchain is an intelligent contract of blockchain which achieves data locking operation relating to states required for cross-chain and triggering operation of the cross-chain events at the blockchain smart contract layer or the blockchain bottom layer. The witness contract on the witness blockchain is an intelligent contract of blockchain that provides registration operation of the cross-chain events.

In the present embodiment, the client, which includes the initiation client and the reception client, is a terminal application for users interacting with the service blockchain.

In addition, in the present embodiment, the witness blockchain is added as an intermediate chain to assist in completing cross-chain operations. The witness blockchain itself does not participate in cross-chain operations, and only register all cross-chain behaviors, resulting in the cross-chain behaviors having features of non-tampering, leaving traces throughout, traceability, collective maintenance, openness and transparency, which ensures the characteristics of decentralization of the cross-chain system of blockchain as well as the "honesty" and "transparency" of the blockchain so as to lay a foundation for creating trust by the blockchain.

Optionally, the first data includes a key name and a first key value, and the first cross-chain initiation event includes the first data. The second service blockchain 11b is configured to query second data matching the key name, modify a second key value of the second data according to the first key value and lock the modified second data, and trigger the cross-chain response event according to the modified second data.

In this way, data exchange between different blockchains are based on key-value pairs, which makes the cross-chain behaviors no longer restricted to homogeneous networks, and cross-chain communication may also be achieved for heterogeneous blockchain networks so as to share resources.

Hereinafter, process of cross-chain data access of the present embodiment will be described in detail in conjunction with the above-mentioned cross-chain system of blockchain.

FIG. 2 is a schematic diagram of interaction process of cross-chain data access of blockchain provided by an embodiment of the present application. As shown in FIG. 2, the interaction process includes the following steps.
①The initiation client 14a requests cross-chain data access.
②The first service blockchain 11a executes the first cross-chain contract according to the request of the initiation client 14a so as to lock the first data corresponding to the cross-chain initiation event.
③ The first adapter 12a monitors the cross-chain initiation event on the first service blockchain 11a in real time.
④When the first adapter 12a monitors the cross-chain initiation event, it calls the witness blockchain 13 to execute the first witness contract on the cross-chain initiation event.
⑤When the first witness contract is completed, the witness blockchain 13 will record the cross-chain initiation event at each node of the witness blockchain 13.
⑥The second adapter 12b monitors the cross-chain initiation event aiming at the second service blockchain 11b from the witness blockchain 13.
⑦The reception client 14b monitors or queries the cross-chain initiation event related to the reception user from the second adapter 12b.
⑧The reception client 14b calls the cross-chain contract of the second service blockchain 11b automatically or in response to a user's request.
⑨The second service blockchain 11b calls the second cross-chain contract according to the request of the reception client 14b to trigger the cross-chain response event corresponding to the cross-chain initiation event.
⑩The second adapter 12b monitors the cross-chain response event on the second service blockchain 11b in real time.
⑪The second adapter 12b, when monitoring the cross-chain response event triggered by the second service blockchain 11b, calls the witness blockchain 13 to execute the second witness contract on the cross-chain response event.
⑫The witness blockchain 13 executes the second witness contract according to the calling of the second adapter, and when the second witness contract is completed, the cross-chain response event is recorded at each node of the witness blockchain 13.
⑬The second adapter 12b monitors the result of execution on the second witness contract from the witness blockchain 13.
⑭When the result of execution on the second witness contract is monitored to be successful, the second adapter 12b calls the second service blockchain 11b to execute the fourth cross-chain contract according to the cross-chain response event.

Optionally, as shown in FIG. 2, in step ⑭ indicated by the dotted line, when the reception client 14b acquires that the result of execution on the second witness contract is successful from the second adapter 12b, the second service blockchain 11b is called to execute the fourth cross-chain contract according to the cross-chain response event.
⑮The second service blockchain 11b executes the fourth cross-chain contract according to the calling of the second adapter 12b or the reception client 14b to unlock the second data.
⑯The first adapter 12a monitors the cross-chain response event from the witness blockchain 13.
⑰When the first adapter 12a monitors the cross-chain response event, the first service blockchain 11a is called to execute the third cross-chain contract according to the cross-chain response event.

Optionally, as shown in FIG. 2, in step ⑰ indicated by the dotted line, when the initiation client 14a acquires the cross-chain response event from the first adapter 12a, the first service blockchain 11a is called to execute the third cross-chain contract according to the cross-chain response event.
⑱The first service blockchain 11a executes the third cross-chain contract according to the calling of the first adapter 12a or the initiation client 14a to unlock the first data.

In the present embodiment, the cross-chain initiation event and the cross-chain response event of the local service blockchain are registered to the witness blockchain by the adapters so as to provide query and push services of cross-chain events to other nodes on the local service blockchain, and related operations on the local service blockchain are triggered according to the cross-chain events of the witness blockchain. As a result, island phenomenon of blockchain information is avoided; data exchange between different blockchains, cross-chain communication between services of multi-parties and the sharing of data resources on different blockchains are achieved; and the utilization efficiency of data resources is improved.

In the present embodiment, the data in the service blockchain is stored in a manner of key-value pairs (K-V).

The first data includes the key name K and the first key value V1. The first cross-chain initiation event includes the first data.

Step ⑨ of the above interaction process includes: the second service blockchain 11b queries the second data matching the key name K, modifies the second key value V2 of the second data according to the first key value V1 of the first data, and lock the modified second data; and the second service blockchain 11b triggers the cross-chain response event according to the locked second data.

Specifically, the modification to the second data is not only a change in the value of the key value, and the modification may also be a logical modification of the key value, including but not limited to adding fields, deleting fields, transferring, state changing, and the like.

Hereinafter, the transferring of school roll archives of students is described as an example.

Nowadays, with respect to students going to school, it is needed to transfer the school roll archives from the previous location of the school roll archives to the current location of the school roll archives to be archived and stored when the students firstly admitted by the new school. Such process will be repeated after graduation, and information of the current learning stage is attached. For example, when a student advances to a junior high school, it is needed to transfer the school roll archive of the primary school to the junior high school to be archived.

Each learning stage is an independent blockchain, and the flow of school roll is the cross-chain data on different school roll chains.

Under the assumption that the school roll archive of a student on the chain uses the ID number as the key name K, and the main content of the key value V has the following fields:
- Name
- Domicile
- Political status
- Education
- Current school
- History school performance
- Others...

The school roll archive of the student on the school roll chain of the primary school is K-V1. When the school roll archive is transferred from the school roll chain of the primary school to the school roll chain of the junior high school, the school roll chain of the junior high school may query the school roll archive K-V2 corresponding to the key name K and modify V2 according to V1 so as to store name, domicile, political status, education, history school performance and others to corresponding locations on V2 and changing the name of the current school to the name corresponding to the junior high school.

When a cross-chain response event is monitored, it means that the school roll archive of the student has been added to the school roll chain of the junior high school, and the status of the school roll archive of the student on the school roll chain of the primary school has been modified as being transferred.

In the process of cross-chain transfer of school roll archives, the witness chain records the transfer process of school roll archives between the school roll chain of the primary school and the school roll chain of the junior high school.

The cross-chain data access technology for blockchain of the present application may be applied to different scenarios, such as the transfer and use of assets back and forth between multiple blockchains, simultaneous exchange of assets between chains and data certification and interaction between chains. Data interaction between homogeneous or heterogeneous blockchains in multiple scenarios may be solved and the utilization efficiency of data resources may be improved by means of the technical solutions of the above embodiments of the present application.

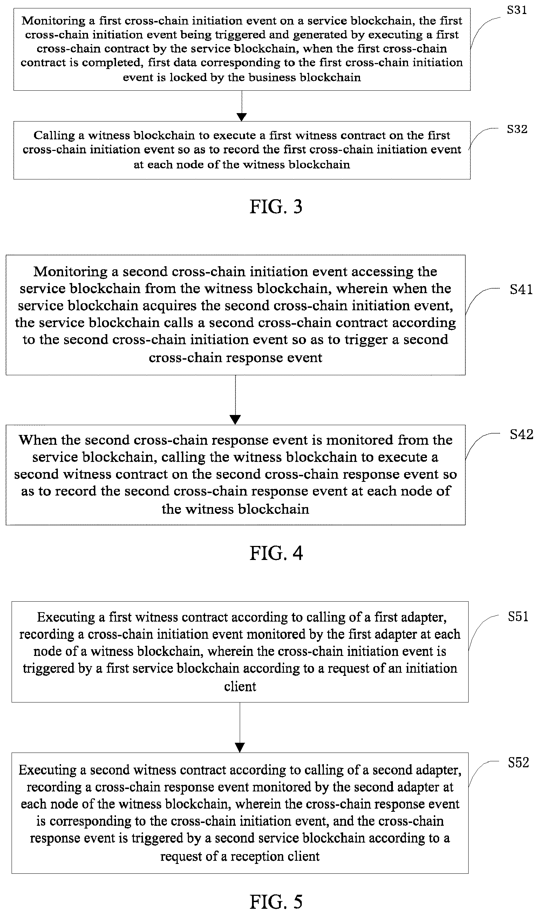

FIG. 3 is a flowchart of a method for cross-chain data access of blockchain provided by another embodiment of the present application. As shown in FIG. 3, the method is applied to the above adapter, and includes the following steps S31 and S32:
at step S31, monitoring a first cross-chain initiation event on a service blockchain, the first cross-chain initiation event being triggered and generated by executing a first cross-chain contract by the service blockchain, wherein when the first cross-chain contract is completed, first data corresponding to the first cross-chain initiation event is locked by the service blockchain; and
at step S32, calling a witness blockchain to execute a first witness contract on the first cross-chain initiation event so as to record the first cross-chain initiation event at each node of the witness blockchain.

FIG. 4 is a flowchart of a method for cross-chain data access of blockchain provided by another embodiment of the present application. As shown in FIG. 4, the method further includes the following steps S41 and S42:
at step S41, monitoring a second cross-chain initiation event accessing the service blockchain from the witness blockchain, wherein when the service blockchain acquires the second cross-chain initiation event, the service blockchain calls a second cross-chain contract according to the second cross-chain initiation event so as to trigger a second cross-chain response event; and
at step S42, when the second cross-chain response event is monitored from the service blockchain, calling the witness blockchain to execute a second witness contract on the second cross-chain response event so as to record the second cross-chain response event at each node of the witness blockchain.

Optionally, the method further includes:
when a first cross-chain response event corresponding to the first cross-chain initiation event is monitored from the witness blockchain, calling the service blockchain to execute a third cross-chain contract so as to unlock the first data on the service blockchain.

In the present embodiment, the cross-chain initiation event and the cross-chain response event of the local service blockchain are registered to the witness blockchain by the adapters so as to provide query and push services of cross-chain events to other nodes on the local service blockchain, and related operations on the local service blockchain are triggered according to the cross-chain events of the witness blockchain. As a result, island phenomenon of blockchain information is avoided; data exchange between different blockchains, cross-chain communication between services of multi-parties and the sharing of data resources on different blockchains are achieved; and the utilization efficiency of data resources is improved.

FIG. 5 is a flowchart of a method for cross-chain data access of blockchain provided by another embodiment of the present application. As shown in FIG. 5, the method is applied to the above witness blockchain, and includes the following steps S51 and S52:
at step S51, executing a first witness contract according to calling of a first adapter, recording a cross-chain initiation event monitored by the first adapter at each node of a witness blockchain, wherein the cross-chain initiation event is triggered by a first service blockchain according to a request of an initiation client; and
at step S52, executing a second witness contract according to calling of a second adapter, recording a cross-chain response event monitored by the second adapter at each node of the witness blockchain, wherein the cross-chain response event is corresponding to the cross-chain initiation event, and the cross-chain response event is triggered by a second service blockchain according to a request of a reception client.

In the present embodiment, the witness blockchain is called after the adapter monitors the cross-chain initiation even and the cross-chain response event on the service blockchain, and the witness blockchain records the cross-chain initiation event and the cross-chain response event at each node according to calling of the adapter so as to provide query and push services of cross-chain events to other nodes on the service blockchain, and related operations on the service blockchain are triggered according to the cross-chain events of the witness blockchain. As a result, island phenomenon of blockchain information is avoided; data exchange between different blockchains, cross-chain communication between services of multi-parties and the sharing of data resources on different blockchains are achieved; and the utilization efficiency of data resources is improved.

The following is an embodiment of the device of the present application, which may be configured to execute the above method embodiment.

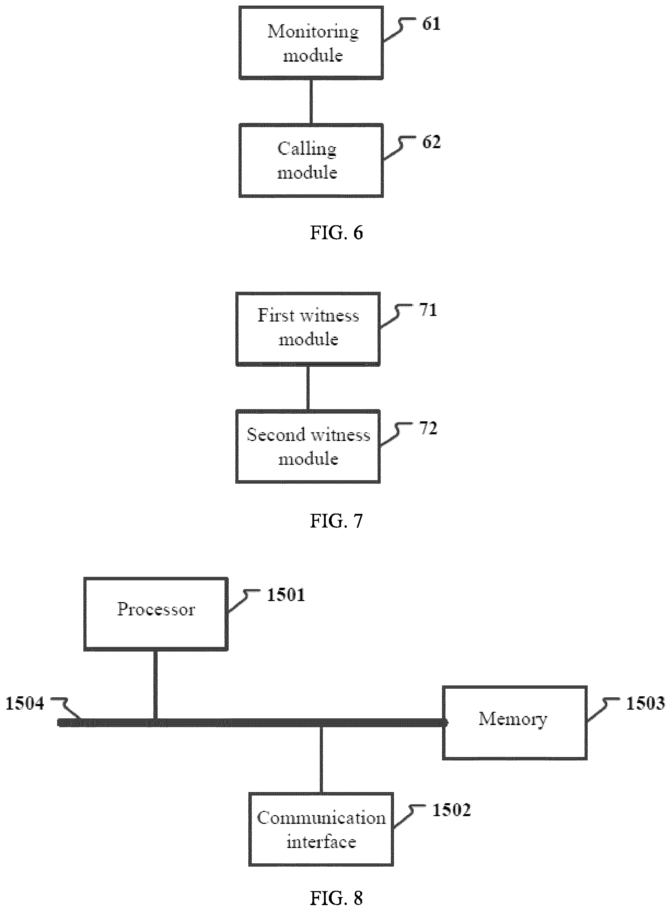

FIG. 6 is a block diagram of an adapter provided by an embodiment of the present application, which may be implemented as part or all of an electronic device by means of software, hardware, or a combination of both. As shown in FIG. 6, the adapter, which is connected between the service blockchain and the witness blockchain, includes the following modules 61 and 62:
a monitoring module 61, configured to monitor a first cross-chain initiation event on the service blockchain, the first cross-chain initiation event being triggered and generated by executing a first cross-chain contract by the service blockchain, wherein when the first cross-chain contract is completed, first data corresponding to the first cross-chain initiation event is locked by the service blockchain; and
a calling module 62, configured to call a witness blockchain to execute a first witness contract on the first cross-chain initiation event so as to record the first cross-chain initiation event at each node of the witness blockchain.

Optionally, the monitoring module 61 is further configured to monitor a second cross-chain initiation event accessing the service blockchain from the witness blockchain, wherein when the service blockchain acquires the second cross-chain initiation event, the service blockchain calls a second cross-chain contract according to the second cross-chain initiation event so as to trigger a second cross-chain response event; and
the calling module 62 is further configured to, when the second cross-chain response event is monitored from the service blockchain by the monitoring module, call the witness blockchain to execute a second witness contract on the second cross-chain response event so as to record the second cross-chain response event at each node of the witness blockchain.

Optionally, the calling module 62 is further configured to, when a first cross-chain response event corresponding to the first cross-chain initiation event is monitored from the witness blockchain by the monitoring module, call the service blockchain to execute a third cross-chain contract so as to unlock the first data on the service blockchain.

FIG. 7 is a block diagram of an apparatus for cross-chain data access of blockchain provided by an embodiment of the present application, which may be implemented as part or all of an electronic device by means of software, hardware, or a combination of both. As shown in FIG. 7, the apparatus, which is applied to the witness blockchain, includes the following modules 71 and 72:
a first witness module 71, configured to execute a first witness contract according to calling of a first adapter, record a cross-chain initiation event monitored by the first adapter at each node of a witness blockchain, wherein the cross-chain initiation event is triggered by a first service blockchain according to a request of an initiation client; and
a second witness module 72, configured to execute a second witness contract according to calling of a second adapter, record a cross-chain response event monitored by the second adapter at each node of the witness blockchain, wherein the cross-chain response event is corresponding to the cross-chain initiation event, and the cross-chain response event is triggered by a second service blockchain according to a request of a reception client.

An embodiment of the present application further provides an electronic device. As shown in FIG. 8, the electronic device may include: a processor 1501, a communication interface 1502, a memory 1503 and a communication bus 1504. The processor 1501, the communication interface 1502, and the memory 1503 communicate with each other by the communication bus 1504.

The memory 1503 is configured to store computer programs.

The processor 1501 is configured to execute the programs stored in the memory 1503 to implement the steps of the above-mentioned method embodiments.

The communication bus mentioned in the above electronic device may be a Peripheral Component Interconnection (PCI) bus or an Extended Industry Standard Architecture (EISA) bus, or the like. The communication bus may be divided into an address bus, a data bus, and a control bus, and the like. For ease of representation, in the figure, the communication bus is only represented by a thick line, but it does not mean that there is only one bus or one type of bus.

The communication interface is used for communication between the above electronic device and other devices.

The memory may include Random Access Memory (RAM), and may include NonVolatile Memory (NVM), for example, at least one disk memory. Optionally, the memory may also be at least one storage device located away from the above processor.

The above processor may be a general-purpose processor, including a Central Processing Unit (CPU), a Network Processor (NP), and the like. The processor may also be a Digital Signal Processor (DSP), an Application Specific Integrated Circuit (ASIC), a Field Programmable Gate Array (FPGA) or other programmable logic devices, discrete gates, transistor logic devices, or discrete hardware components.

The present application further provides a computer-readable storage medium, which stores computer programs thereon, and when the computer programs are executed by a processor, the steps of the above-mentioned method embodiments are implemented.

It should be noted that, with respect to the embodiments of the above device, electronic device and computer-readable storage medium, since they are basically similar to the method embodiments, the description is relatively simple, and for related parts, it is enough to refer to the description of the method embodiments.

It should be further noted that in the present application, relational terms such as "first" and "second" are only used to distinguish one entity or operation from another entity or operation, and do not necessarily require or imply the existence of any such actual relation or sequence between these entities or operations. Moreover, the terms "include," "contain" or any other variant thereof are intended to cover non-exclusive inclusion, such that a process, method, article or device that includes a series of elements includes not only those elements but also other elements not explicitly listed, or also other elements that are inherent to such process, method, article, or device. Without further limitations, the element defined by the sentence "include a ..." does not exclude that there are other identical elements in the process, method, article or device that includes the one element.

The above are only specific implementations of the present application, such that those of skill in the art may understand or implement the present application. Various modifications to these embodiments will be apparent to those of skill in the art, and the general principles defined herein may be implemented in other embodiments without departing from the spirit or scope of the present application. Therefore, the present application will not be limited to the embodiments shown herein, but should conform to the widest scope consistent with the principles and novel features claimed herein.

## Claims

1. A method for cross-chain data access of blockchain, **characterized in that**, the method comprises:
monitoring a first cross-chain initiation event on a service blockchain, the first cross-chain initiation event being triggered and generated by executing a first cross-chain contract by the service blockchain, wherein when the first cross-chain contract is completed, first data corresponding to the first cross-chain initiation event is locked by the service blockchain; and
calling a witness blockchain to execute a first witness contract on the first cross-chain initiation event so as to record the first cross-chain initiation event at each node of the witness blockchain.

2. The method according to claim 1, **characterized in that**, the method further comprises:
monitoring a second cross-chain initiation event accessing the service blockchain from the witness blockchain, wherein when the service blockchain acquires the second cross-chain initiation event, the service blockchain calls a second cross-chain contract according to the second cross-chain initiation event so as to trigger a second cross-chain response event; and
calling, when the second cross-chain response event is monitored from the service blockchain, the witness blockchain to execute a second witness contract on the second cross-chain response event so as to record the second cross-chain response event at each node of the witness blockchain.

3. The method according to claim 1, **characterized in that**, the method further comprises:
calling, when a first cross-chain response event corresponding to the first cross-chain initiation event is monitored from the witness blockchain, the service blockchain to execute a third cross-chain contract so as to unlock the first data on the service blockchain.

4. An adapter, **characterized in that** the adapter is connected between a service blockchain and a witness blockchain, the adapter comprises:
a monitoring module, configured to monitor a first cross-chain initiation event on the service blockchain, the first cross-chain initiation event being triggered and generated by executing a first cross-chain contract by the service blockchain, wherein when the first cross-chain contract is completed, first data corresponding to the first cross-chain initiation event is locked by the service blockchain; and
a calling module, configured to call a witness blockchain to execute a first witness contract on the first cross-chain initiation event so as to record the first cross-chain initiation event at each node of the witness blockchain.

5. The adapter according to claim 4, **characterized in that**,
the monitoring module is further configured to monitor a second cross-chain initiation event accessing the service blockchain from the witness blockchain, wherein when the service blockchain acquires the second cross-chain initiation event, the service blockchain calls a second cross-chain contract according to the second cross-chain initiation event so as to trigger a second cross-chain response event; and
the calling module is further configured to, when the second cross-chain response event is monitored from the service blockchain by the monitoring module, call the witness blockchain to execute a second witness contract on the second cross-chain response event so as to record the second cross-chain response event at each node of the witness blockchain.

6. The adapter according to claim 4, **characterized in that**,
the calling module is further configured to, when a first cross-chain response event corresponding to the first cross-chain initiation event is monitored from the witness blockchain by the monitoring module, call the service blockchain to execute a third cross-chain contract so as to unlock the first data on the service blockchain.

7. A method for cross-chain data access of blockchain, **characterized in that**, the method comprises:
executing a first witness contract according to calling of a first adapter, and recording a cross-chain initiation event monitored by the first adapter at each node of a witness blockchain, wherein the cross-chain initiation event is triggered by a first service blockchain according to a request of an initiation client; and
executing a second witness contract according to calling of a second adapter, and recording a cross-chain response event monitored by the second adapter at each node of the witness blockchain, wherein the cross-chain response event is corresponding to the cross-chain initiation event, and the cross-chain response event is triggered by a second service blockchain according to a request of a reception client.

8. An apparatus for cross-chain data access of blockchain, **characterized in that**, comprises:
a first witness module configured to execute a first witness contract according to calling of a first adapter, record a cross-chain initiation event monitored by the first adapter at each node of a witness blockchain, wherein the cross-chain initiation event is triggered by a first service blockchain according to a request of an initiation client; and
a second witness module configured to execute a second witness contract according to calling of a second adapter, record a cross-chain response event monitored by the second adapter at each node of the witness blockchain, wherein the cross-chain response event is corresponding to the cross-chain initiation event, and the cross-chain response event is triggered by a second service blockchain according to a request of a reception client.

9. A cross-chain system of blockchain, **characterized in that**, comprises: at least two service blockchains and at least one witness blockchain with adapters providing between each of the service blockchains and each of the witness blockchain, wherein a first adapter is connected between a first service blockchain and the witness blockchain and a second adapter is connected between a second service blockchain and the witness blockchain;
the first service blockchain, configured to execute a first cross-chain contract according to a request of an initiation client to trigger a cross-chain initiation event and lock first data corresponding to the cross-chain initiation event, and execute a third cross-chain contract according to a cross-chain response event to unlock the first data;
the first adapter, configured to, when the cross-chain initiation event is monitored from the first service blockchain, call the witness blockchain to execute a first witness contract on the cross-chain initiation event, and monitor the cross-chain response event from the witness blockchain;
the witness blockchain, configured to execute the first witness contract according to calling of the first adapter, and record the cross-chain initiation event at each node of the witness blockchain, and execute a second witness contract according to calling of the second adapter and record the cross-chain response event at each node of the witness blockchain;
the second adapter, configured to monitor the cross-chain initiation event aiming at the second service blockchain from the witness blockchain, and when the cross-chain response event triggered by the second service blockchain is monitored, call the witness blockchain to execute the second witness contract on the cross-chain response event; and
the second service blockchain, configured to, when the cross-chain initiation event is acquired from the second adapter by a reception client, call a second cross-chain contract according to a request of the reception client so as to trigger the cross-chain response event corresponding to the cross-chain initiation event.

10. The system according to claim 9, **characterized in that**, the first data comprises a key name and a first key value, and the first cross-chain initiation event comprises the first data; and
the second service blockchain is configured to query second data matching the key name, modify a second key value of the second data according to the first key value and lock the modified second data, and trigger the cross-chain response event according to the modified second data.

11. An electronic device, **characterized in that**, comprises: a processor, a communication interface, a memory, and a communication bus, wherein the processor, the communication interface, and the memory communicate with each other by the communication bus;
the memory is configured to store computer programs; and
the processor is configured to implement steps of the method according to any one of claims 1-3 and 7 when executing the computer programs.

12. A computer-readable storage medium on which computer programs are stored, **characterized in that**, when the computer programs are executed by a processor, steps of the method according to any one of claims 1-3 and 7 are implemented.
